# Europäisches Patentamt

# European Patent Office

# Office européen des brevets

(11) Veröffentlichungsnummer: **0 175 219**
**B1**

(12) **EUROPÄISCHE PATENTSCHRIFT**

(45) Veröffentlichungstag der Patentschrift:
**11.05.88**

(51) Int. Cl.⁴: **F 17 D 5/02,** F 17 D 5/04,
G 01 N 33/00

(21) Anmeldenummer: **85111198.9**

(22) Anmeldetag: **05.09.85**

(54) **Hohie Leitung zur Anwendung bei der Bestimmung von Konzentrationsprofilen flüssiger oder gasförmiger Stoffe.**

(30) Priorität: **19.09.84 DE 3434322**
**19.09.84 DE 3434323**

(43) Veröffentlichungstag der Anmeldung:
**26.03.86 Patentblatt 86/13**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 431 907**
**DE - B - 2 304 919**
**DE - B - 2 513 223**
**DE - C - 1 023 102**
**US - A - 3 600 674**

(73) Patentinhaber: **Issel, Wolfgang, Dr.-Ing.,**
**Stösserstrasse 6a, D-7500 Karlsruhe 21 (DE)**

(72) Erfinder: **Issel, Wolfgang, Dr.-Ing., Stösserstrasse 6a,**
**D-7500 Karlsruhe 21 (DE)**

(74) Vertreter: **Durm, Klaus, Dr.-Ing., Patentanwälte Dr.-Ing.**
**Klaus Durm Dipl.-Ing. Frank Durm**
**Felix-Mottl-Strasse 1a, D-7500 Karlsruhe 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine hohle Leitung zur Anwendung bei der Bestimmung von Konzentrationsprofilen flüssiger oder gasförmiger Stoffe entlang einer Strecke, wobei die zur Aufnahme eines in zeitlichen Abständen hindurchzuschiebenden und an einem Detektor vorbeizuführenden Prüfmediums vorgesehene Leitung so ausgebildet ist, dass die Stoffe in das Innere der Leitung eindringen können.

Mit der DE-A-2 431 907 des Anmelders sind ein Verfahren und eine Vorrichtung bekannt geworden, mit deren Hilfe Konzentrationsprofile von flüssigen und gasförmigen Stoffen längs einer Strecke auf relativ einfache Weise mit hoher Präzision bestimmt werden können. Diese Methode hat insbesondere Anwendung bei der Überwachung von Rohöl- und Gas-Fernleitungen auf Lecks gefunden. Hierzuu wird entlang der Strecke (in Gestalt der Fernleitung) eine hohle Leitung, verlegt, welche so ausgebildet ist, dass die Stoffe (also das ausgetretene Rohöl oder Gas) in ihr Inneres eindringen können. Vorzugsweise wird ein Schlauch aus einem Kunststoff verwendet, welcher die Stoffe in das Innere der Leitung hineindiffundieren lässt. Diese Leitung wird mit einem Prüfmedium (z.B. Luft bzw. Wasser) gefüllt und die Säule dieses Prüfmediums in zeitlichen Abständen durch die Leitung hindurchgeschoben und an einem für die Stoffe empfindlichen Detektor vorbergeführt. Lage und Ausmass eines Lecks lassen sich so einwandfrei bestimmen.

Die Einsatzmöglichkeiten des bekannten Verfahrens werden durch zwei Umstände beeinflusst: einerseits durch eine ausreichende Grösse der Diffusionsrate der nachzuweisenden Stoffe durch die Wandung der hohlen Leitung zwecks Ausbildung des auszuwertenden Konzentrationsprofiles und andererseits durch die Aufrechterhaltung der Amplituden des ausgebildeten Konzentrationsprofiles während des Durchschiebens durch die Leitung. Das Problem hierbei ist, dass die für die hohle Leitung zur Verfügung stehenden Materialien (Kunststoffe) zwar ausreichende Diffusionseigenschaften besitzen, aber viele eindiffundierten Stoffe während des Durchschiebens zum Detektor wieder hinausdiffundieren. Dies hat zur Folge, dass manche Stoffe, wie z.B. Benzol, und Dieselöl, bereits nach einer kurzen Laufstrecke in der hohlen Leitung aus dem Prüfmedium verschwinden und am Detektor nicht ankommen. Zur Bestimmung von Konzentrationsprofilen bei hohen Umgebungstemperaturen sowie unter der Einwirkung ionisierender Strahlen — wie dies beispielsweise bei der Überwachung von Heissdampfleitungen in Kernkraftwerken der Fall ist — sind die bekannten, aus Kunststoffen bestehenden hohlen Leitungen wegen ihrer mangelnden Widerstandsfähigkeit unbrauchbar.

Die Aufgabe der Erfindung besteht nun darin, die hohle Leitung so auszubilden, dass deren Wandabsorption herabgesetzt wird, ohne dabei die Eindiffusion nennenswert zu beeinträchtigen und dass auch Konzentrationsprofile in Bereichen hoher Umgebungstemperatur und unter Einwirkung ionisierender Strahlen bestimmt werden können.

Zur Lösung der gestellten Aufgabe wird von einer hohlen Leitung ausgegangen, die so ausgebildet ist, dass die Stoffe, deren Konzentrationsprofile bestimmt werden sollen, in das Innere der Leitung eindringen können, und gelöst wird diese Aufgabe dadurch, dass die Leitung aus einem biegsamen Material hergestellt ist, durch welches die Stoffe in das Innere der Leitung eindiffundieren können, und dass im Innern der Leitung und in deren Längsrichtung eine hohle Innenleitung vorgesehen ist, deren Wandung Öffnungen aufweist und aus einer Substanz besteht, welche für die Stoffe undurchlässig ist.

Mit der Erfindung wird demzufolge vorgeschlagen, die hohle Leitung nicht mehr wie bisher mit einer homogenen Wandung herzustellen, sondern sie vielmehr aus zwei verschiedenen Materialien aufzubauen. Der weitaus grössere Teil der wirksamen Wand der neuen hohlen Leitung besteht aus einer Substanz, welche keine absorptiven Eigenschaften besitzt und somit für die Stoffe undurchlässig ist, während bei dem kleineren Teil — den Öffnungen — ein anderes Material wirksam wird, durch welches die Stoffe hindurchdiffundieren und in das Innere der Leitung eindringen (hineindiffundieren) können.

Eine derartige Leitung besteht somit aus zwei Schichten: die äussere Schicht besteht aus einem Material, durch welches die Stoffe hindurchdiffundieren können, und die innere Schicht ist aus einer Substanz hergestellt, welche keine Eindiffusion erlaubt und daher auch keine absorptiven Eigenschaften besitzt — jedoch eine Vielzahl von kleinen Öffnungen aufweist, durch welche die durch die äussere Schicht hindurchdiffundierten Stoffe in das Innere der Leitung eindringen können. Mit anderen Worten: die undurchlässige, mit Öffnungen versehene Leitung ist mit einem Schlauch aus einem durchlässigen Material überzogen.

Da beim Durchschieben des Prüfmediums durch die erfindungsgemäss ausgebildete hohle Leitung die durch die Öffnungen in das Innere der Leitung eindiffundierten Stoffe fast nur noch mit der Wand der Leitung in Berührung kommen, welche für die Stoffe undurchlässig ist, können diese praktisch nicht mehr hinausdiffundieren, so dass auch zur Bestimmung von Konzentrationsprofilen bisher kritischer Stoffe (Benzol, Dieselöl) die zu überwachenden Strecken mehrere Kilometer lang sein können.

Vorteilhaft ist der Querschnitt aller Öffnungen eines Abschnittes der Innenleitung wenigstens fünfzig mal kleiner als die Mantelfläche dieses Abschnittes. Bei dieser Dimensionierung ist das Hinausdiffundieren der Stoffe äusserst gering.

Es ist zweckmässig, wenn die Innenleitung dicht an der Innenwand der Leitung anliegt.

Aus Gründen preiswerter Hertellung kann die Innenleitung durch ein spiralig gewundenes Band gebildet sein, welches an einer seiner Längskanten mit Ausnehmungen versehen ist. Diese Ausnehmungen bilden die erforderlichen Öffnungen.

Vorteilhaft besteht die Innenleitung aus Hart-Polyvinyl-Chlorid, einer Substanz, welche so gut wie keine absorptiven Eigenschaften aufweist.

Die gestellte Aufgabe kann ebensogut dadurch gelöst werden, dass die Leitung aus einer Substanz besteht, welche für die eindiffundierten Stoffe undurchlässig ist und in Abständen mit Öffnungen versehen ist, die mit einem Material verschlossen sind, durch welches die Stoffe in das Innere der Leitung hineindiffundieren können.

In vorteilhafter Ausgestaltung dieser alternativen Lösung der Erfindung ist die Leitung ein die Öffnungen tragendes, starres Rohr mit einer für die Stoffe undurchlässigen Wand, und die Öffnungen sind mit dem Material verschlossen, durch welches die Stoffe in das Innere der Leitung hineindiffundieren können.

Vorteilhaft dienen zum Verschliessen der Öffnungen Pfropfen, die aus dem Material bestehen, durch welches die Stoffe hineindiffundieren können.

Unter der Voraussetzung, dass das die hohle Leitung bildende Rohr aus einem temperaturbeständigen Material (temperaturresistenter Kunststoff oder Metall) besteht und die Pfropfen poröse keramische bzw. metallische Sinterkörper sind, kann der Gegenstand der Erfindung vorteilhaft ebensogut zur Bestimmung von Konzentrationsprofilen bei höheren und hohen Umgebungstemperaturen wie unter der Einwirkung von ionisierenden Strahlen — wie dies beispielsweise bei der Überwachung von Heissdampfleitungen in Kernkraftwerken in Betracht kommt — benutzt werden.

Bei einer anderen Ausgestaltung der Erfindung sind die Öffnungen durch eine die Leitung umwindende Wicklung aus einem Band verschlossen, welches aus dem Material besteht, durch das die Stoffe in das Innere der Leitung hineindiffudieren können.

Die hohle Leitung kann auch ein metallenes Wellrohr sein, in das in Abständen Muffen eingefügt sind, welche die mit den Pfropfen verschlossenen Öffnungen tragen. Eine solche Leitung wird vorteilhaft zur Überwachung von Rohrkrümmern von Heissdampfleitungen angewandt oder sie lässt sich leicht spiralförmig um eine gerade Dampfleitung legen.

Preiswert herzustellen und beim Verlegen einfach zu handhaben ist eine Leitung, die aus Rohrabschnitten besteht, deren als die Öffnungen dienende Stösse mit Schlauchabschnitten aus dem Material verschlossen sind, durch welches die Stoffe in das Innere der Leitung hineindiffundieren können. Eine solche Leitung vermag auch Krümmungen zu folgen.

Bei Umgebungstemperaturen von bis zu 300 Grand Celsius bestehen die Pfropfen, die Wicklung bzw. der Schlauchabschnitt aus vorteilhaft Polytetrafluorethylen, während bei niedrigen Temperaturen Polyethylen verwendbar ist.

Die Erfindung ist in den beigefügten Zeichnungen in sechs verschiedenen Ausführungen dargestellt, welche nachstehend näher erläutert werden. Es zeigen:

Fig. 1 ein Stück einer hohlen Leitung mit einer hohlen Innenleitung, welche Kränze von Öffnungen aufweist, in perspektivischer Darstellung, ungefähr in natürlicher Grösse;

Fig. 2 ein Stück einer hohlen Leitung mit einer Innenleitung in Gestalt eines dicht spiralig gewickelten Bandes mit Ausnehmungen an seiner Längskante, in Perspektive und natürlicher Grösse;

Fig. 3 ein Stück einer Leitung, bei welcher die Öffnungen mit Pfropfen verschlossen sind, in einem Längsschnitt;

Fig. 4 ein Stück einer Leitung aus Wellrohr mit einer eingefügten, im Längsschnitt dargestellten Muffe, die eine mit einem Pfropfen verschlossene Öffnung aufweist;

Fig. 5 ein Stück einer Leitung, bei welcher die Öffnungen durch eine Wicklung verschlossen sind, im Längsschnitt;

Fig. 6 ein Stück einer Leitung, die aus geraden Rohrabschnitten zusammengesetzt ist, deren die Öffnungen bildenden Stösse mit Schlauchabschnitten verbunden sind, in einem Längsschnitt.

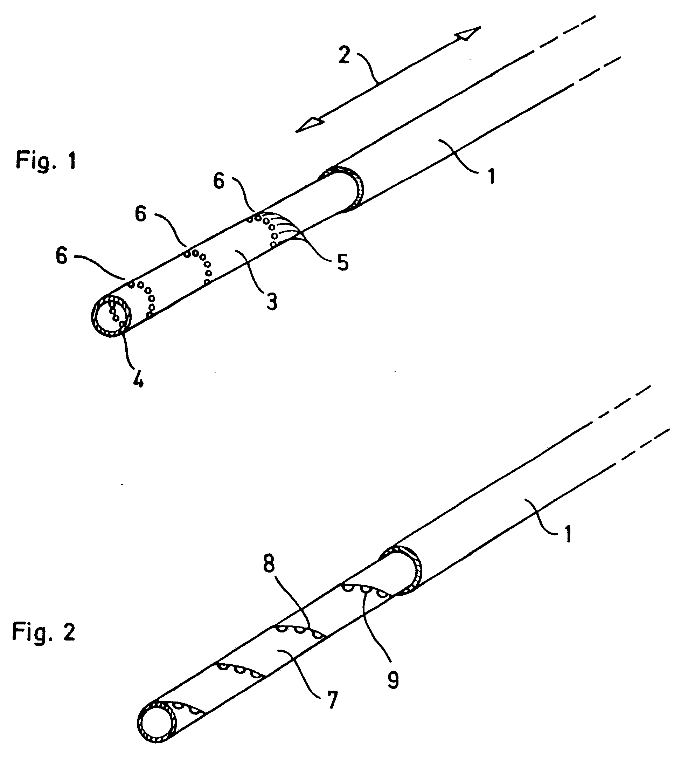

Die in Fig. 1 dargestellte hohle Leitung 1 ist entweder ein biegsames Rohr oder ein flexibler Schlauch, und besteht aus einem Material, durch das die flüssigen oder gasförmigen Stoffe, deren Konzentrationsprofil bestimmt werden soll, in das Innere der Leitung 1 hineindiffundieren können. Diese hohle Leitung 1 besteht vorzugsweise aus Polyäthylen, welche eine hohe Durchlässigkeit infolge von Diffusion gegenüber den flüssigen Stoffen Benzin, Benzol, Dieselöl und Alkoholen sowie gegenüber den gasförmigen Stoffen Wasserstoff, Methan, Ammoniak und Äthylen besitzt. Diese hohle Leitung 1 wird parallel zu einer Strecke verlegt, beispielsweise einer Rohölbzw. Gas-Fernleitung, oder sie wird in den Erdboden eingegraben.

Im Innern der Leitung 1 ist in deren Längsrichtung 2 eine hohle Innenleitung 3 koaxial angeordnet, welche dicht an der Innenwand der Leitung 1 anliegt. Diese Innenleitung 3 in Gestalt eines biegsamen Rohres bzw. flexiblen Schlauches besteht aus einer Substanz, durch welche die Stoffe, deren Konzentrationsprofil bestimmt werden soll, nicht hindurchdiffundieren können; demgemäss besteht die Innenleitung 3 vorzugsweise aus Hart-Polyvinyl-Chlorid, welches eine sehr kleine Durchlässigkeit gegenüber den oben genannten Flüssigkeiten und Gasen aufweist.

Die Wandung 4 der Innenleitung 3 ist mit vielen kleinen Öffnungen 5 versehen, die unterschiedlich angeordnet sein können. Der gesamte Querschnitt aller Öffnungen 5 eines bestimmten Abschnittes der Innenleitung 3 ist wenigstens fünfzig mal kleiner als die Mantelfläche dieses Abschnittes. Durch diese Öffnungen 5 gelangen die durch die hohle Leitung 1 hindurchdiffundierten Stoffe praktisch ungehindert in das Innere der Leitung.

Bei der in Fig. 1 abgebildeten Ausführungsform der Leitung 1 sind die Öffnungen 5 am Umfang der Innenleitung 3 in Form von Kränzen 6 angeordnet. Die Öffnungen 5 der Innenleitung 3 können auch in in Längsrichtung 2 liegenden Reihen liegen. Zwischen den einzelnen Kränzen bzw. zwischen den Reihen sind in Längsrichtung 2 betrachtet Abstände vorgesehen.

Die Innenleitung 3 kann, wie die Fig. 2 verdeutlicht, auch durch ein entsprechend der Form einer Spirale gewundenes Band 7 aus Hart-Polyvinyl-Chlorid gebildet sein. Dieses dicht gewickelte Band 7 ist an einer seiner Längskanten 8 mit kleinen Ausnehmungen 9 versehen. Ist dieses Band jedoch nicht dicht gewickelt, dann bilden dessen Längskanten 8 einen etwas unregelmässigen, schmalen, spiraligen Spalt, der als Öffnung 5 wirksam ist.

Es ist technisch kein Problem, die vorgeschlagene Leitung herzustellen. Hierbei werden bei der Ausführungsform gemäss Fig. 1 die Öffnungen 5 in die Wandung 4 der Innenleitung 3 eingestanzt und dann die (äussere) Leitung 1 durch Extrudieren aufgebracht.

Die Leitung 1 könnte auch durch Bewickeln der mit den Öffnungen 5 versehenen Innenleitung 3 mit einem Band aus Polyäthylen gefertigt werden. An die Stelle der über die ganze Länge sich erstreckenden Leitung 1 könnten ebensogut kurze Abschnitte (nicht dargestellt) treten, welche nur die Öffnungen 5 überdecken.

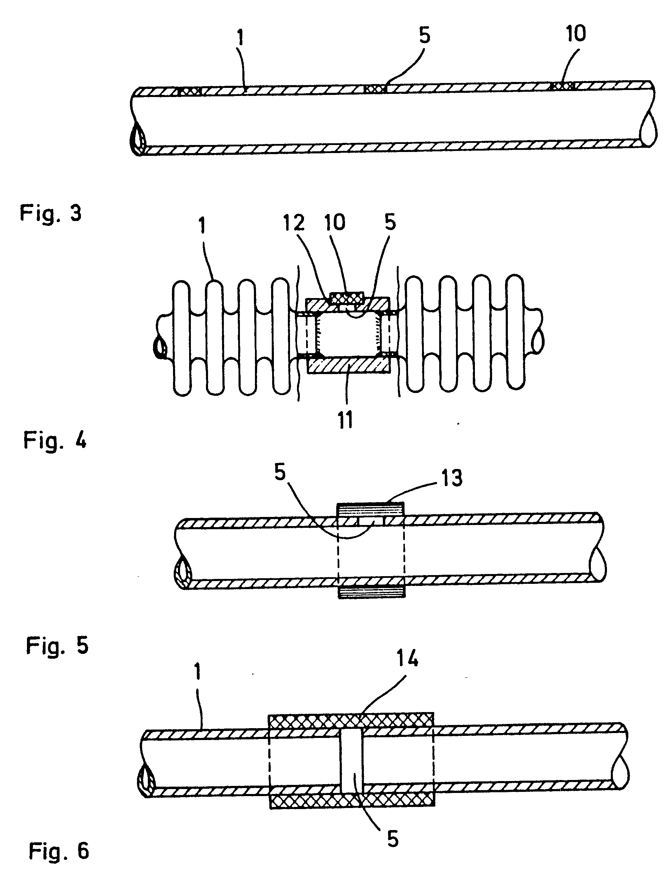

Die Fig. 3 zeigt eine Leitung 1 aus einer für die Stoffe undurchlässigen Substanz, nämlich einem glatten, handelsüblichen Metallrohr. Die in Abständen im Metallrohr angeordneten, relativ kleinen Öffnungen 5 sind mit Pfropfen 10 aus einem Material verschlossen, durch welches die Stoffe, deren Konzentrationsprofil bestimmt werden soll, hindurchdiffundieren können.

Die Pfropfen 10 bestehen, wenn die Anforderungen an ihre Temperaturbeständigkeit nicht allzu hoch sind, aus Polyethylen, sind sie dagegen höher, aus Polytetrafluorethylen. Wird jedoch nicht nur sehr hohe Temperaturbeständigkeit, sondern zusätzlich auch Widerstandsfähigkeit gegen Einflüsse ionisierender Strahlen gefordert, dann finden poröse keramische Sinterkörper (z.B. aus Aluminiumoxyd) oder poröse metallische Sinterkörper (aus Nickel- bzw. Edelstahlsintermetall) als Pfropfen 10 Verwendung.

Die in Fig. 4 dargestellte Leitung 1 besteht aus einem metallenen Wellrohr, in welches in Abständen Muffen 11 aus Metall eingefügt sind. Jede dieser Muffen 11 trägt wenigstens eine der Öffnungen 5. Alle Öffnungen 5 sind mit einem Pfropfen 10 in Gestalt einer kleinen, zylindrischen Pille verschlossen, welche in eine hierfür vorgesehene, zylindrische Wanne 7 der Muffe 11 eingepresst bzw. eingelötet ist.

In Fig. 5 ist eine hohle Leitung 1 wiedergegeben, welche aus einem glatten Metallrohr entsprechend dem in Fig. 3 beschriebenen besteht. Die Öffnungen 5 dieses Metallrohres sind mit einer Wicklung 13 aus einem Material verschlossen, welches aus einem für die Stoffe durchlässigen Material besteht. Zur Herstellung der Wicklung dient ein um die Leitung 1 ein- oder mehrmals gewundenes Band aus Kunststoff, insbesondere aus Polyethylen oder Polytetrafluorethylen.

Die Leitung 1 gemäss Fig. 6 besteht aus Rohrabschnitten eines gewöhnlichen geraden Metallrohres, die mit Hilfe von Schlauchabschnitten 14 aus einem Material verbunden sind, durch welches die Stoffe, deren Konzentrationsprofil bestimmt werden soll, hindurchdiffundieren können. Diese Schlauchabschnitte 14 sind so auf die Enden der Metallrohre aufgesteckt, dass diese in einem geringen Abstand voneinander stehen, so dass sich dadurch Öffnungen 5 von kreisringförmiger Gestalt ergeben; durch diese schlitzartigen Öffnungen 5 können die Stoffe in das Innere der Leitung eindringen. Bei äquidistanter Anordnung der Schlauchabschnitte 14 beträgt deren Abstand etwa 50 Zentimeter.

*Zusammenstellung der verwendeten Bezugsziffern*

1   (hohle Leitung)
2   Längsrichtung
3   Innenleitung
4   Wandung (von 3)
5   Öffnungen
6   Kränze
7   Band
8   Längskante
9   Ausnehmungen
10  Pfropfen
11  Muffen
12  Wanne
13  Wicklung
14  Schlauchabschnitte

**Patentansprüche**

1. Hohle Leitung zur Anwendung bei der Bestimmung von Konzentrationsprofilen flüssiger oder gasförmiger Stoffe entlang einer Strecke, wobei die zur Aufnahme eines in zeitlichen Abständen hindurchzuschiebenden und an einem Detektor vorbeizuführenden Prüfmediums vorgesehene Leitung so ausgebildet ist, dass die Stoffe in das Innere der Leitung eindringen können, dadurch gekennzeichnet, dass die Leitung (1) aus einem biegsamen Material hergestellt ist, durch welches die Stoffe in das Innere der Leitung (1) eindiffundieren können und dass im Innern der Leitung (1) und in deren Längsrichtung (2) eine hohle Innenleitung (3) vorgesehen ist, deren Wandung (4) Öffnungen (5) aufweist und aus einer Substanz besteht, welche für die Stoffe undurchlässig ist.

2. Hohle Leitung nach Anspruch 2, dadurch gekennzeichnet, dass der Querschnitt aller Öffnungen (5) eines Abschnittes der Innenleitung (3) wenigstens fünfzig mal kleiner ist als die Mantelfläche dieses Abschnittes.

3. Hohle Leitung nach Anspruch 1 und 2, dadurch gekennzeichnet, dass die Innenleitung (3) dicht an der Innenwand der Leitung (1) anliegt.

4. Hohle Leitung nach Anspruch 1 bis 3, dadurch gekennzeichnet, dass die Innenleitung (3) durch ein spiralig gewundenes Band (7) gebildet ist, welches an einer seiner Längskanten (8) mit Ausnehmungen (9) versehen ist.

5. Hohle Leitung nach Anspruch 1 bis 4, dadurch gekennzeichnet, dass die Innenleitung (3) aus Hart-Polyvinyl-Chlorid besteht.

6. Hohle Leitung zur Anwendung bei der Bestimmung von Konzentrationsprofilen flüssiger oder gasförmiger Stoffe entlang einer Strecke, wobei die zur Aufnahme eines in zeitlichen Abständen hindurchzuschiebenden und an einem Detektor vorbeizuführenden Prüfmediums vorgesehene Leitung so ausgebildet ist, dass die Stoffe in das Innere der Leitung eindringen können, dadurch gekennzeichnet, dass die Leitung (1) aus einer Substanz besteht, welche für die eindiffundierten Stoffe undurchlässig ist und in Abständen mit Öffnungen (5) versehen ist, die mit einem Material verschlossen sind, durch welches die Stoffe in das Innere der Leitung hineindiffudieren können.

7. Hohle Leitung nach Anspruch 6, dadurch gekennzeichnet, dass die Leitung (1) ein die Öffnungen (5) tragendes, starres Rohr mit einer für die Stoffe undurchlässigen Wand ist.

8. Hohle Leitung nach den Ansprüchen 6 und 7, dadurch gekennzeichnet, dass zum Verschliessen der Öffnungen (5) Pfropfen (10) dienen, die aus dem Material bestehen, durch welches die Stoffe hineindiffundieren können.

9. Hohle Leitung nach Anspruch 8, dadurch gekennzeichnet, dass die Pfropfen (10) poröse keramische Sinterkörper sind.

5. Hohle Leitung nach Anspruch 8, dadurch gekennzeichnet, dass die Pfropfen (10) poröse metallische Sinterkörper sind.

11. Hohle Leitung nach Anspruch 6, dadurch gekennzeichnet, dass die Öffnungen (5) durch eine die Leitung (1) umwindende Wicklung (13) aus einem Band verschlossen sind, welches aus dem Material besteht, durch das die Stoffe in das Innere der Leitung (1) hineindiffundieren können.

12. Hohle Leitung nach Anspruch 8, dadurch gekennzeichnet, dass die Leitung (1) ein metallenes Wellrohr ist, in das in Abständen Muffen (11) eingefügt sind, welche die mit den Pfropfen (10) verschlossenen Öffnungen (5) tragen.

13. Hohle Leitung nach Anspruch 6, dadurch gekennzeichnet, dass die Leitung (1) aus Rohrabschnitten besteht, deren als die Öffnungen (5) dienende Stösse mit Schlauchabschnitten (14) aus dem Material verschlossen sind, durch welches die Stoffe in das Innere der Leitung (1) hineindiffundieren können.

14. Hohle Leitung nach einem der Ansprüche 8, 11 oder 13, dadurch gekennzeichnet, dass die Pfropfen (10), die Wicklung (13) bzw. der Schlauchabschnitt (14) aus Polytetrafluorethylen bestehen.

**Claims**

1. Hollow line for determining the concentration profiles of liquid or gaseous substances along a route, with the line provided for carrying a test medium, which is to be passed through at intervals in time and guided past a detector, being formed such that the substances can penetrate into the line, characterised in that the line (1) is produced from a flexibles material through which the substances can diffuse into the line (1), and that a hollow inner line (3) is provided inside the line (1) and in the longitudinal direction (2) of the latter, the wall (4) of which line (3) comprises holes (5) and consists of a material which is impermeable to the substances.

2. Hollow line according to claim 1, characterised in that the cross section of all the holes (5) of a segment of the inner line (3) is at least fifty times smaller than the surface area of this segment.

3. Hollow line according to claims 1 and 2, characterised in that the inner line (3) lies closely against the inside wall of the line (1).

4. Hollow line according to claims 1 to 3, characterised in that the inner line (3) is formed by a strip (7) which is wound in a spiral manner and is provided with recesses (9) at one of its longitudinal edges (8).

5. Hollow line according to claims 1 to 4, characterised in that the inner line (3) consists of rigid polyvinyl chloride.

6. Hollow line for determining the concentration profiles of liquid or gaseous substances along a route, with the line provided for carrying a test medium, which is to be passed through at intervals in time and guided past a detector, being formed such that the substances can penetrate into the line, characterised in that the line (1) consists of a material which is impermeable to the diffusing substances and is provided at intervals with holes (5) which are closed by a material through which the substances can diffuse into the line.

7. Hollow line according to claim 6, characterised in that the line (1) is a rigid pipe which bears the holes (5) and comprises a wall which is impermeable to the substances.

8. Hollow line according to claims 6 and 7, characterised in that stoppers (10), which consist of the material through which the substances can diffuse, are used to close the holes (5).

9. Hollow line according to claim 8, characterised in that the stoppers (10) are porous ceramic sintered bodies.

10. Hollow line according to claim 8, characterised in that the stoppers (10) are porous metallic sintered bodies.

11. Hollow line according to claim 6, characterised in that the holes (5) are closed by a winding (13) which is formed from a strip, is wound around the line (1) and consists of the material through which the substances can diffuse into the line (1).

12. Hollow line according to claim 8, characterised in that the line (1) is a metallic corrugated pipe into which sleeves (11) are inserted at intervals, which sleeves bear the holes (5) closed by the stoppers (10).

13. Hollow line according to claim 6, characterised in that the line (1) consists of pipe segments, the joints of which, serving as the holes (5), are closed by flexible tube segments (14) of the material through which the substances can diffuse into the line (1).

14. Hollow line according to one of claims 8, 11 or 13, characterised in that the stoppers (10), the winding (13) and the flexible tube segment (14) consist of polytetrafluoroethylene.

**Revendications**

1. Conduit tubulaire pour la détermination de profils de concentration de substances liquides ou gazeuses le long d'une voie, le conduit prévu pour la réception d'un fluide d'essai devant être envoyé à des intervalles de temps et passer devant un détecteur étant conformé de telle façon que les substances peuvent pénétrer à l'intérieur du conduit, caractérisé en ce que le conduit (1) est réalisé à partir d'un matériau flexible par lequel les substances peuvent diffuser à l'intérieur du conduit (1), et qu'à l'intérieur du conduit (1) et dans l'extension longitudinale (2) de celui-ci est prévu un conduit tubulaire intérieur (3) dont la paroi (4) présente des orifices (5) et qui est réalisée à partir d'une matière imperméable aux substances considérées.

2. Conduit tubulaire selon la revendication 1, caractérisé en ce que la section transversale de tous les orifices (5) d'une section du conduit intérieur (3) est inférieure d'au moins cinquante fois à la surface de l'enveloppe de cette section.

3. Conduit tubulaire selon l'une des revendications 1 ou 2, caractérisé en ce que le conduit intérieur (3) est appliqué directement contre la paroi intérieure du conduit (1).

4. Conduit tubulaire selon l'une quelconque des revendications 1 à 3, caractérisé en ce que le conduit intérieur (3) est constitué par une bande (7) enroulée en spirale et pourvue d'évidements (9) sur l'une de ses arêtes longitudinales (8).

5. Conduit tubulaire selon l'une quelconque des revendications 1 à 4, caractérisé en ce que le conduit intérieur (3) est réalisé en chlorure de polyvinyle dur.

6. Conduit tubulaire pour la détermination de profils de concentration de substances liquides ou gazeuses le long d'une voie, le conduit prévu pour la réception d'une fluide d'essai devant être envoyé à des intervalles de temps et passer devant un détecteur étant conformé de telle façon que les substances peuvent pénétrer à l'intérieur du conduit, caractérisé en ce que le conduit (1) est réalisé à partir d'une matière qui interdit la diffusion des substances à l'intérieur et présente par intervalles des orifices (5) obturés au moyen d'un matériau par lequel les substances peuvent diffuser à l'intérieur du conduit.

7. Conduit tubulaire selon la revendication 6, caractérisé en ce que le conduit (1) est un tube rigide muni des orifices (5) avec une paroi imperméable aux substances considérées.

8. Conduit tubulaire selon l'une des revendications 6 ou 7, caractérisé en ce que l'obturation des ouvertures (5) est assurée par des bouchons (10) réalisés en un matériau permettant la diffusion des substances.

9. Conduit tubulaire selon la revendication 8, caractérisé en ce que les bouchons (10) sont des corps frittés poreux en céramique.

10. Conduit tubulaire selon la revendication 8, caractérisé en ce que les bouchons (10) sont des corps frittés poreux en métal.

11. Conduit tubulaire selon la revendication 6, caractérisé en ce que les orifices (5) sont obturés par un enroulement (13) entourant le conduit (1) et constitué par une bande réalisée à partir d'une matière qui permet aux substances de diffuser à l'intérieur du conduit (1).

12. Conduit tubulaire selon la revendication 8, caractérisé en ce que le conduit (1) est un tube ondulé métallique dans lequel sont insérés par intervalles des manchons (11) qui comportent des ouvertures (5) obturées par des bouchons (10).

13. Conduit tubulaire selon la revendication 6, caractérisé en ce que le conduit (1) est composé de sections de tube dont les jointures servant d'ouvertures (5) sont obturées au moyen de sections de tuyau souple (14) réalisées à partir d'une matière qui permet aux substances de diffuser à l'intérieur du conduit (1).

14. Conduit tubulaire selon l'une quelconque des revendications 8, 11 ou 13, caractérisé en ce que les bouchons (10), l'enroulement (13) et respectivement la section de tuyau souple (14) sont réalisés en polytétrafluoréthylène.

Fig. 1

Fig. 2

Fig. 3

Fig. 4

Fig. 5

Fig. 6